# EUROPÄISCHE PATENTANMELDUNG

(11) **EP 0 529 433 A1**
(43) Veröffentlichungstag der Anmeldung: **03.03.1993**
(21) Anmeldenummer: 92113847.5
(22) Anmeldetag: 13.08.1992
(51) Int. Cl.: B60R 19/34, F16F 7/12, B61G 11/16

(54) **Stossverzehrvorrichtung, insbesondere für ein Kraftfahrzeug**

(30) Priorität: 29.08.1991 DE 4128768
(71) Anmelder: Austria Metall Aktiengesellschaft, A-5282 Braunau am Inn (AT)
(72) Erfinder: Garnweidner, Peter, A-5112 Lamprechtshausen 429a (AT)
(74) Vertreter: WILHELMS, KILIAN & PARTNER Patentanwälte

(57) **Zusammenfassung**

Stoßverzehrvorrichtung, insbesondere für ein Kraftfahrzeug, zum Aufnehmen der Stoßenergie beim Aufprall. Ein Kraftaufnahmeteil ist in Form eines Zugprüfbandes (3) ausgebildet, das am Fahrzeugrahmen befestigt ist, wobei im Zugprüfband (3) ein Druckkörper (2) angeordnet ist, an dem der aufzufangende Stoß liegt.

## Beschreibung

Die Erfindung betrifft eine Stoßverzehrvorrichtung, insbesondere für ein Kraftfahrzeug.

Stoßverzehrvorrichtungen für Kraftfahrzeuge dienen dazu, die bei einer Kollision entstehenden Aufprall- oder Stoßkräfte aufzunehmen und zu absorbieren, um die Verformung des Fahrzeugrahmens und die Gefährdung der Insassen möglichst gering zu halten. Dazu ist es bei Fahrzeugen üblich, die Stoßverzehrvorrichtungen zwischen den Stoßstangen und dem Fahrzeugrahmen anzuordnen. Während eines Unfalls muß das Fahrzeug über die gesamte Kollisionsabfolge seine Geschwindigkeit vermindern, um die Belastungen der Insassen möglichst gering zu halten. Daher ist es notwendig, die Festigkeitsreserven der Rahmenkonstruktion des Fahrzeuges voll auszunutzen. Das bedeutet, daß der Verformungswiderstand am Anfang der Kollision möglichst hoch sein soll, um eine bestmögliche Verformungsarbeit zu leisten. Es muß daher eine möglichst konstante Kraft über den Kollisionsverlauf gegeben sein. Es sind diverse Halterungen von Stoßstangen bekannt, bei denen die Umformarbeit eines Bauteiles dazu benutzt wird, diese konstante Kraft zu erzeugen.

Die bekannten Vorrichtungen haben jedoch den Nachteil, daß nach einem Typschaden der Austausch der Stoßverzehrvorrichtung mit hohen Kosten verbunden ist und daß die Stoßverzehrvorrichtung selbst in ihrem Aufbau kompliziert ist, was hohe Herstellungskosten bedingt.

Die der Erfindung zugrunde liegende Aufgabe besteht daher darin, eine Stoßverzehrvorrichtung, insbesondere für ein Kraftfahrzeug, zu schaffen, die nach einem Typschaden einfach und kostengünstig ausgetauscht werden kann.

Diese Aufgabe wird gemäß der Erfindung durch ein Kraftaufnahmeteil in Form wenigstens eines Zugprüfbandes gelöst, das an dem vor einem Stoß zu schützenden Bauteil, insbesondere am Fahrzeugrahmen, befestigt ist und in dem ein Druckkörper angeordnet ist, an dem der aufzufangende Stoß liegt.

Bei der erfindungsgemäßen Vorrichtung kann das Zugprüfband aus einem einfachen Bandmaterial kostengünstig gefertigt werden, wobei die Montage sehr einfach von außen her erfolgen kann.

Die erfindungsgemäße Stoßverzehrvorrichtung hat darüber hinaus ein ausgezeichnetes Stoßverzehrvermögen, wobei das Zugprüfband und der Druckkörper kostengünstige Bauelemente sind, die insbesondere im Falle eines Typschadens einfach und kostengünstig von außen zugänglich ausgetauscht werden können.

Ein weiterer Vorteil der erfindungsgemäßen Stoßverzehrvorrichtung besteht darin, daß bei ihr eine genau berechenbare Stoßverzehrenergie erreicht werden kann.

Besonders bevorzugte Weiterblldungen und Ausgestaltungen der erfindungsgemäßen Stoßverzehrvorrichtung sind Gegenstand der Patentansprüche 2 bis 6.

Im folgenden werden anhand der zugehörigen Zeichnung besonders bevorzugte Ausführungsbeispiele der Erfindung näher beschrieben. Es zeigen
Fig. 1A eine teilweise geschnittene Seitenansicht eines Ausführungsbeispiels der erfindungsgemäßen Stoßverzehrvorrichtung im unbelasteten Zustand längs der Linie A-A in Fig. 1B,
Fig. 1B eine Draufsicht auf das Ausführungsbeispiel der erfindungsgemäßen Stoßverzehrvorrichtung im unbelasteten Zustand,
Fig. 2A eine Fig. 1A entsprechende Seitenansicht längs der Linie A-A in Fig. 2B des Ausführungsbeispiel der erfindungsgemäßen Stoßverzehrvorrichtung im belasteten Zustand,
Fig. 2B eine Draufsicht des Ausführungsbeispiel der erfindungsgemäßen Stoßverzehrvorrichtung im belasteten Zustand,
Fig. 3A eine Draufsicht auf ein weiteres Ausführungsbeispiel der erfindungsgemäßen Stoßverzehrvorrichtung im unbelasteten Zustand,
Fig. 3B eine teilweise geschnittene Seitenansicht des in Fig. 3A dargestellten Ausführungsbeispiels im unbelasteten Zustand längs der Linie A-A in Fig. 3A,
Fig. 4A eine Draufsicht auf das Ausführungsbeispiel der erfindungsgemäßen Stoßverzehrvorrichtung in der ersten Belastungsstufe,
Fig. 4B eine teilweise geschnitttene Seitenansicht des Ausführungsbeispiels der erfindungsgemäßen Stoßverzehrvorrichtung in der ersten Belastungsstufe längs der Linie A-A in Fig. 4A,
Fig. 5A eine Draufsicht auf das Ausführungsbeispiel der erfindungsgemäßen Stoßverzehrvorrichtung in der zweiten Belastungsstufe,
Fig. 5B eine teilweise geschnittene Seitenansicht des Ausführungsbeispiels der erfindungsgemäßen Stoßverzehrvorrichtung in der zweiten Belastungsstufe längs der Linie A-A in Fig. 5A, und
Fig. 6 in einem Diagramm den Kraft/Weg-Verlauf bei dem in Fig. 3A dargestellten Ausführungsbeispiel der erfindungsgemäßen Stoßverzehrvorrichtung.

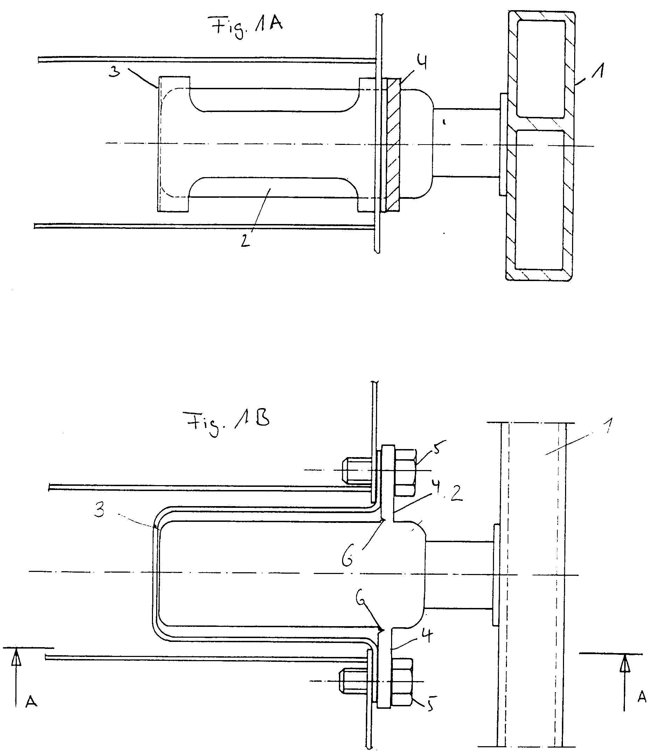

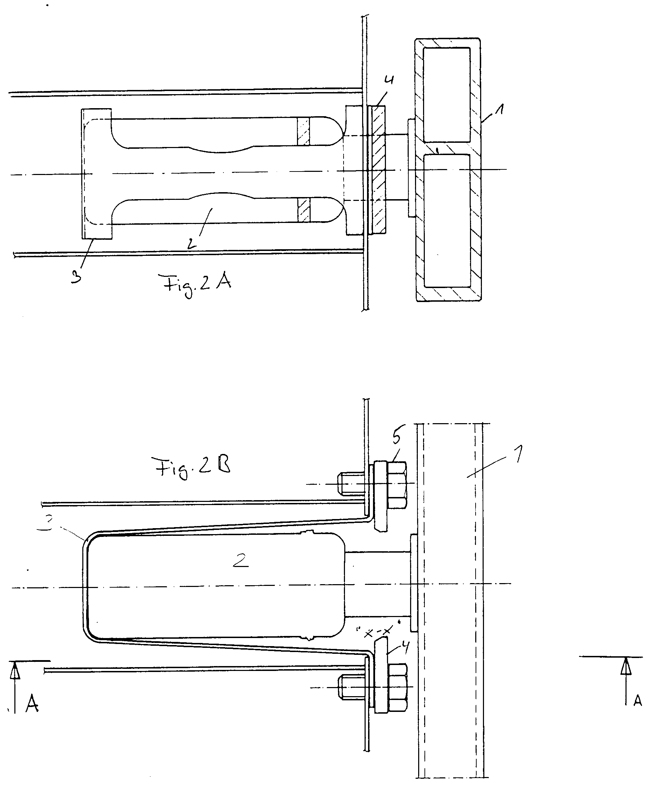

Das in Fig. 1 und 2 dargestellte Ausführungsbeispiel der erfindungsgemäßen Stoßverzehrvorrichtung für ein Kraftfahrzeug besteht im wesentlichen aus einem die auftretende Stoßkraft aufnehmenden Bauteil in Form eines Zugprüfbandes 3, auf das die Stoßkraft, die bei einer Kollision an einem Kraftaufnahmebauteil 1 beispielsweise der Stoßstange liegt, übertragen wird. Die Dimensionierung der Bruchstelle des Zugprüfbandes 3 wird dabei so gewählt, daß die maximal gewünschte Stoßverzehrenergie gewährleistet ist.

Die an der Stoßstange 1 liegende Stoßkraft wird auf das Zugprüfband 3 über einen Druckkörper oder einen Druckteil 2 übertragen, das an der Stoßstange 1 befestigt ist und in dem Zugprüfband 3 angeordnet ist, wie es insbesondere in Fig. 1B dargestellt ist.

Das Druckelement 2 stützt sich am tragenden Aufbau des Fahrzeuges, d.h. am Fahrzeugrahmen, ab und ist dort vorzugsweise zusammen mit dem Zugprüfband 3 befestigt. Die Befestigung des Druckkörpers 2 erfolgt gemäß Fig. 1B über zwei zungenförmige Teile 4, die radial vom langgestreckten Druckkörper 2 vorstehen und mit Bohrungen versehen sind, durch die Schrauben 5 fuhren, die in den Fahrzeugrahmen geschraubt sind. Wie es in Fig. 1B dargestellt ist, dienen die Schrauben 5 auch zur Befestigung des Zugprüfband 3, das im Querschnitt U-förmig ausgebildet ist und zwei radiale Flansche aufweist, durch die diese Schrauben 5 führen.

Wie es in Fig. 1A dargestellt ist, hat das Zugprüfband 3 in einer Seitenansicht eine H-förmige Ausbildung, es besteht aus einem entsprechend gebogenen Bandmaterial.

Wie es im einzelnen in Fig. 1B dargestellt ist, sind am Druckkörper 2 Sollbruchstellen 6 vorgesehen, die in Form von Kerben oder Nuten im Bereich der Verbindung zwischen den zungenförmigen Teilen 4 und dem Druckkörper 2 vorgesehen sind. Diese Kerben sind vorzugsweise an der in Stoßrichtung abgewandten Seite der zungenförmigen Teile 4 angeordnet.

In den Fig. 2A und 2B, die den Fig. 1A und 1B entsprechen, ist die Stoßverzehrvorrichtung im belasteten Zustand dargestellt. Beim Auftreten einer Belastung am Kraftaufnahmeteil 1, d.h. der Stoßstange, beispielsweise bei einem Aufprall, liegt am Druckkörper 2 eine entsprechende Stoßkraft. Wenn diese Stoßkraft einen bestimmten Wert übersteigt, reißt die Verbindung zwischen den zungenförmigen Teilen 4 und dem Druckkörper 2 an den Sollbruchstellen 6 ab, wobei der dazu notwendige Initialstoß durch die Ausbildung der Sollbruchstellen festgelegt werden kann. Nach Abreißen an den Sollbruchstellen wird das Zugprüfband 3 durch den Druckkörper 2 beaufschlagt. Es kommt dann zu einer Dehnung entsprechend der Spannungsdehnungskurve des verwendeten Werkstoffes des Zugprüfbandes 3. Aluminium, das sehr hohe Dehnungswerte hat, ist als Material für das Zugprüfband 3 besonders geeignet.

Im Verlauf der Verformung des Zugprüfbandes 3 wird die dabei aufgewandte Energie, d.h. die Stoßenergie absorbiert, wobei der vollbelastete Zustand in den Fig. 2A und 2B dargestellt ist. Die Bruchstelle des Zugprüfbandes 3 kann dabei auf die maximal gewünschte Stoßverzehrenergie eingestellt werden.

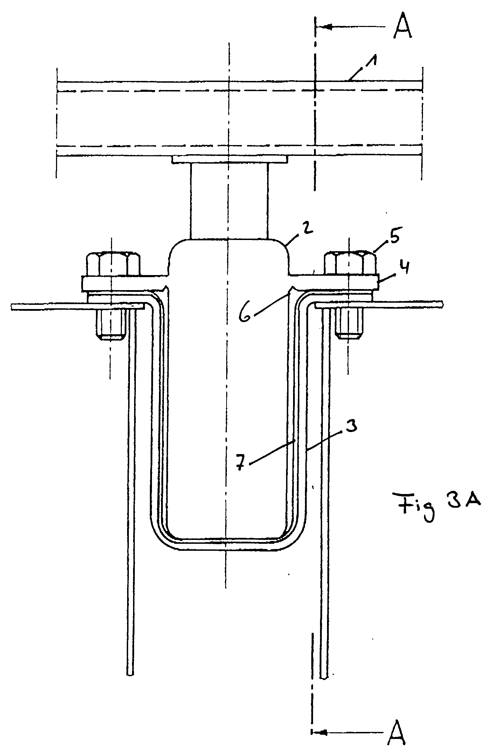

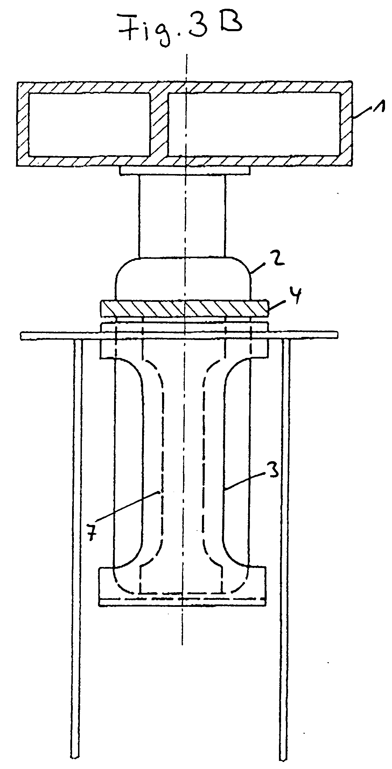

In den Fig. 3 bis 5 ist ein zweites Ausführungsbeispiel der erfindungsgemäßen Stoßverzehrvorrichtung dargestellt.

Das zweite Ausführungsbeispiel der erfindungsgemäßen Stoßverzehrvorrichtung unterscheidet sich von dem in Fig. 1 und 2 dargestellten ersten Ausführungsbeispiel im wesentlichen dadurch, daß im ersten Zugprüfband 3 ein weiteres schwächeres Zugprüfband 7 angeordnet ist, das aus einem Werkstoff mit wesentlich geringerer Bruchdehnung als dem Werkstoff besteht, aus dem das äußere Zugprüfband 3 ausgebildet ist.

Der Druckkörper 2 ist im inneren zweiten Zugprüfband 7 angeordnet, so daß er beide Zugprüfbänder 3, 7 beaufschlagt.

Die Ausbildung mit mehreren Zugprüfbändern hat gegenüber der Ausbildung mit nur einem Zugband Vorteile, da bei einem einzigen Zugband ein annähernd rechteckiger Kraftverlauf nur zu ca. 70% erreicht werden kann. Das Problem ist darin begründet, daß bei Legierungen mit hoher Bruchdehnung von beispielsweise mehr als 40% die Dehngrenze nur ca. 60% der Festigkeit beträgt. Da die Anordnung auf maximale Kraft dimensioniert werden muß, wird am Beginn der Verformung die maximal zulässige Kraft nicht erreicht.

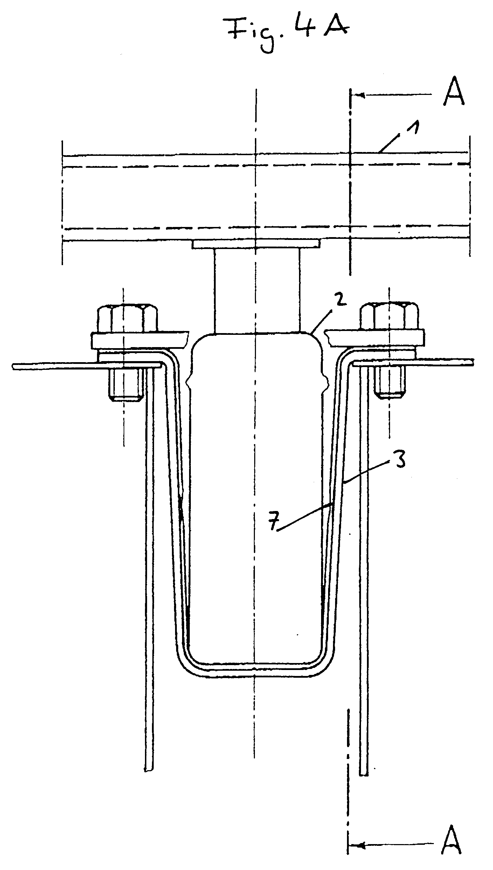

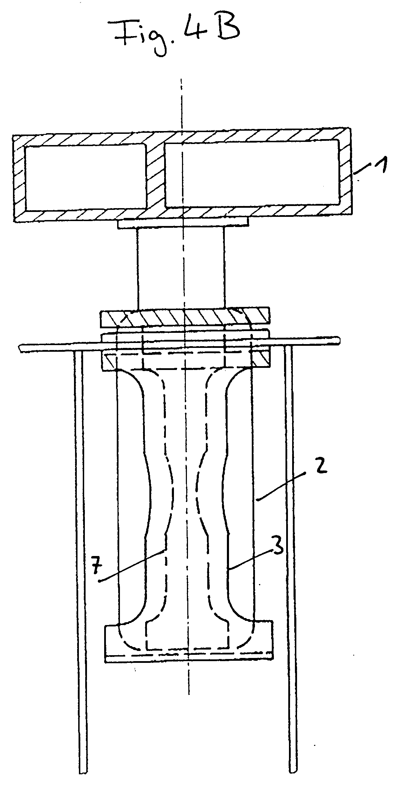

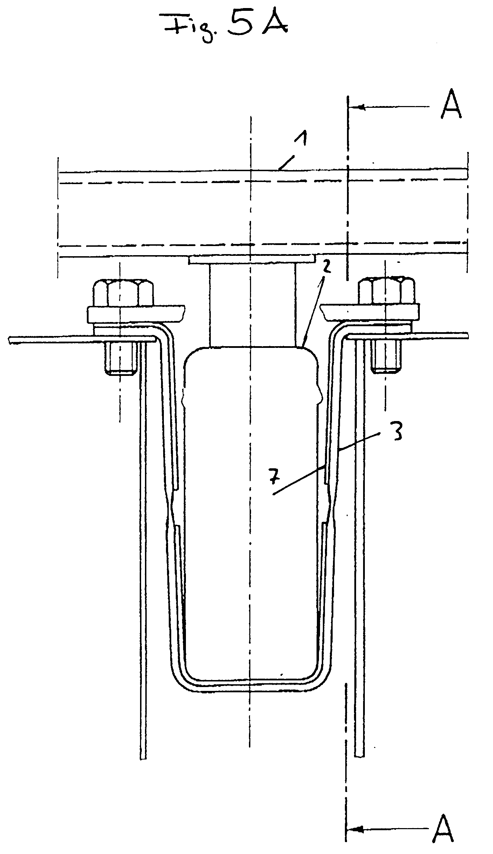

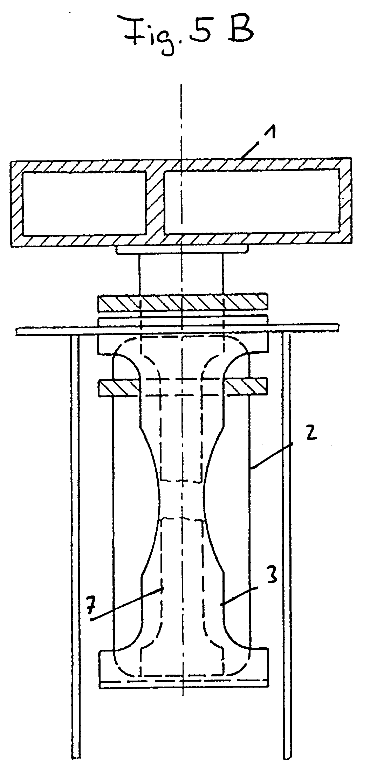

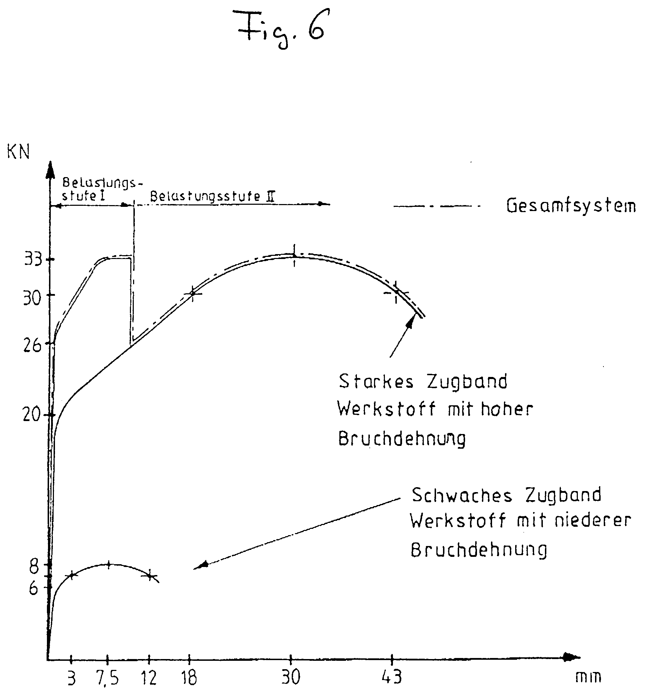

Wie es in den Fig. 4 und 5 und insbesondere in Fig. 6 dargestellt ist, wird bei dem in Fig. 3 dargestellten Ausführungsbeispiel mit zwei Zugbändern 3, 7 erreicht, daß am Anfang der Stoßbelastung beide Zugbänder 3, 7 wirksam sind und nach ca. 15 bis 20% des Dehnweges, was werkstoffabhängig ist, das schwächere Zugband 7 reißt, und nurmehr das stärkere Zugband 3 mit der hohen Bruchdehnung wirkt.

Dadurch ist es möglich, das Energieaufnahmevermögen noch weiter zu steigern.

Es können auch mehr als zwei Zugprüfbänder vorgesehen sein.

## Patentansprüche

1. Stoßverzehrvorrichtung, insbesondere für ein Kraftfahrzeug, gekennzeichnet durch
ein Kraftaufnahmeteil in Form wenigstens eines Zugprüfbandes (3), das an dem vor einem Stoß zu schützenden Bauteil, insbesondere am Fahrzeugrahmen befestigt ist, und in dem ein Druckkörper (2) angeordnet ist, an dem der aufzufangende Stoß liegt.

2. Vorrichtung nach Anspruch 1, dadurch gekennzeichnet, daß der Druckkörper (2) an dem zu schützenden Bauteil über eine Befestigungseinrichtung (4, 5) befestigt ist, die mit wenigstens einer Sollbruchstelle (6) versehen ist, die beim Anliegen einer bestimmten Stoßkraft bricht.

3. Vorrichtung nach Anspruch 2, dadurch gekennzeichnet, daß die Befestigungseinrichtung (4, 5) aus zungenförmigen Teilen (4) besteht, die radial am langgestreckten Druckkörper (2) angebracht sind und mit dem zu schützenden Bauteil verbunden sind, wobei die Sollbruchstellen (6) durch Kerben gebildet sind, die im Bereich der Verbindung zwischen den zungenförmigen Teilen 4 und dem Druckkörper (2) vorgesehen sind.

4. Vorrichtung nach Anspruch 3, dadurch gekennzeichnet, daß die Kerben an der in Stoßrichtung abgewandten Seite der zungenförmigen Teile (4) ausgebildet sind.

5. Vorrichtung nach einem der vorhergehenden Ansprüche, dadurch gekennzeichnet, daß das Zugprüfband (3) im Querschnitt U-förmig ausgebildet ist.

6. Vorrichtung nach Anspruch 1, dadurch gekennzeichnet, daß zwei Zugprüfbänder (3, 7) ineinander angeordnet sind, die aus Materialien mit verschiedener Bruchdehnung bestehen, wobei das innere Zugprüfband (7) aus dem Werkstoff mit der geringeren Bruchdehnung gebildet ist.
